# EUROPÄISCHE PATENTSCHRIFT

(11) **EP 3 559 857 B1**
(45) Veröffentlichungstag und Bekanntmachung des Hinweises auf die Patenterteilung: **30.07.2025**
(21) Anmeldenummer: 17826453.7
(22) Anmeldetag: 12.12.2017
(51) Int. Cl.: G06V 40/16

(54) **VORRICHTUNG ZUM REDUZIEREN EINES FARBSTICHS EINES GESICHTSBILDES**
DEVICE FOR REDUCING A COLOR STITCH OF A FACE PICTURE
DISPOSITIF DE RÉDUCTION D'UN POINT DE COULEUR D'UNE IMAGE DE VISAGE

(30) Priorität: 22.12.2016 DE 102016125356
(43) Veröffentlichungstag der Anmeldung: 30.10.2019
(73) Patentinhaber: Bundesdruckerei GmbH, 10969 Berlin (DE)
(72) Erfinder: WOLF, Andreas, 13158 Berlin (DE)
(74) Vertreter: Patentship Patentanwaltsgesellschaft mbH
(86) Internationale Anmeldenummer: PCT/EP2017/082382
(87) Internationale Veröffentlichungsnummer: WO 2018/114471

(56) Entgegenhaltungen:
- EP-A1- 2 091 021
- US-A1- 2006 129 411
- US-A1- 2010 214 421

## Beschreibung

Die vorliegende Erfindung betrifft das Gebiet der Farbkorrektur von Gesichtsbildern von Personen, insbesondere zur Verwendung in Identifikationsdokumenten sowie Zugangskontrollanordnungen.

Heutige Gesichtserkennungsalgorithmen verwenden typischerweise keine Farbinformationen, sondern lediglich Orts-, Kontrast und Texturinformationen von erfassten Gesichtsbildern zur Identifizierung von Personen. Dies ist insbesondere darauf zurückzuführen, dass in der Praxis gegenwärtig keine verlässliche Farbkorrektur von Gesichtsbildern, insbesondere von Passbildern, existiert. Dies gilt ebenso für erfasste Gesichtsbilder für Verifikationszwecke, wie etwa in Zugangskontrollanordnungen oder ABC-Gates, bei denen das erfasste Gesichtsbild mit einem hinterlegten Gesichtsbild verglichen wird. In derartigen Umgebungen erweist sich schon eine gleichmäßige Beleuchtung des Gesichtes typischerweise als Herausforderung.

In Ländern, in denen zur Beantragung eines Identifikationsdokumentes auf ausgedruckte und wieder eingescannte Gesichtsbilder zurückgegriffen wird, wie beispielsweise gegenwärtig in Deutschland, kommen zu einer unbekannten Beleuchtung des Gesichtes bei der Erfassung des Gesichtsbildes weitere Veränderungen beim Druck und beim nachfolgenden Einscannen des ausgedruckten Gesichtsbildes hinzu. Ferner kann in bestimmten Fällen das Farberfassungsverhalten des Sensors der Bildkamera unbekannt sein. Folglich gibt es typischerweise zumindest drei Stellen, an denen die Farben des Gesichtsbildes deutlich verändert werden können, wodurch ein Farbstich des Gesichtsbildes bewirkt werden kann.

Aus diesem Grunde wird bei der Anwendung von Gesichtserkennungsalgorithmen typischerweise auf die Auswertung der Farbinformationen verzichtet, wodurch die Erkennungsleistung nachteilig beeinflusst wird. Ferner weisen Gesichtsbilder in Identifikationsdokumenten häufig einen Farbstich auf, wodurch beispielsweise die reale Hautfarbe der Person verfälscht dargestellt wird.

In J. F. Dlugos, J. L. Taylor, "Field Application Report: Materials Characterization: UV/Vis/NIR Spectroscopy; Visible Reflectance Spectroscopy of Human Skin: the use of CIE L*a*b* Color Analysis for In Vivo Ethnic Skin Characterization", PerkinElmer Inc., 2012, sind typische Hautfarben und Haarfarben von Personen in einem CIE L*a*b*-Farbraum angegeben.

Es ist daher eine Aufgabe der vorliegenden Erfindung, ein effizientes Konzept zum Reduzieren eines Farbstichs eines Gesichtsbildes einer Person zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe unter Verwendung eines Referenzfarbstreifens gelöst werden kann, welcher zusätzlich zu einem Gesicht einer Person in einem erfassten Gesichtsbild sichtbar ist. Verwendung eines Referenzfarbstreifens ist z.B. bekannt aus Dokumenten US 2006/129411 A1 und US 2010/214421 A1. Der Referenzfarbstreifen umfasst dabei zumindest ein Referenzfarbfeld mit einer vorbestimmten Referenzfarbe. Der Referenzfarbstreifen wird typischerweise bei der Erfassung des Gesichtsbildes in einer Umgebung der Person angeordnet, sodass dieser in dem Gesichtsbild sichtbar ist. Das Gesichtsbild kann anschließend mehrere analoge und/oder digitale Verarbeitungsschritte durchlaufen, beispielsweise ausgedruckt und wieder eingescannt werden, wodurch ein unerwünschter Farbstich des Gesichtsbildes bewirkt werden kann. Der Farbstich des Gesichtsbildes kann anschließend unter Verwendung des Referenzfarbstreifens in dem Gesichtsbild automatisiert reduziert werden. Der Referenzfarbstreifen wird ferner automatisiert aus dem korrigierten Gesichtsbild entfernt.

Ausführungsformen ermöglichen insbesondere die Einhaltung zukünftiger Standards zur Erfassung von Gesichtsbildern für Identifikationsdokumente, wodurch etablierte Prozeduren bei der Beantragung von Identifikationsdokumenten beibehalten werden können. Derartige Standards werden beispielsweise von der International Civil Aviation Organization (ICAO) gesetzt, welche beispielsweise die Einhaltung von ISO/IEC 19794-5 bzw. ISO/IEC 39794-5 bei der Erfassung von Gesichtsbildern fordert. Ferner kann durch die zusätzliche Verwendung von Farbinformationen durch Zugangskontrollanordnungen eine verbesserte Erkennungsleistung im Sinne kleinerer Klassifikationsfehler erreicht werden.

Gemäß einem ersten Aspekt betrifft die Erfindung eine Vorrichtung zum Reduzieren eines Farbstichs eines Gesichtsbildes einer Person, wobei das Gesichtsbild ein Abbild eines Gesichts der Person und eines Referenzfarbstreifens umfasst. Der Referenzfarbstreifen umfasst ein Referenzfarbfeld, wobei dem Referenzfarbfeld eine vorbestimmte Referenzfarbe zugeordnet ist. Die Vorrichtung umfasst einen Speicher, welcher ausgebildet ist, das Gesichtsbild zu speichern. Die Vorrichtung umfasst ferner einen Prozessor, welcher ausgebildet ist, den Referenzfarbstreifen in dem Gesichtsbild zu erfassen, das Referenzfarbfeld in dem erfassten Referenzfarbstreifen zu erfassen, eine Farbe aus dem erfassten Referenzfarbfeld zu extrahieren, die extrahierte Farbe mit der vorbestimmten Referenzfarbe zu vergleichen, um eine Farbabweichung zu erhalten, und den Farbstich des Gesichtsbildes auf der Basis der Farbabweichung zu reduzieren, um ein korrigiertes Gesichtsbild zu erhalten. Die Reduzierung des Farbstichs kann beispielsweise mittels einer Farbtransformation erfolgen, wobei eine Verschiebung der Farben des Gesichtsbildes in einem Farbraum durchgeführt werden kann. Hierdurch kann ein korrigiertes Gesichtsbild erhalten werden, bei dem die Farben aller zu dem Gesicht der Person gehörigen Bildpunkte - soweit notwendig - gestützt auf die Farbabweichung korrigiert werden.

Gemäß einer Ausführungsform umfasst der Referenzfarbstreifen ein weiteres Referenzfarbfeld, wobei dem weiteren Referenzfarbfeld eine weitere vorbestimmte Referenzfarbe zugeordnet ist, und wobei der Prozessor ausgebildet ist, das weitere Referenzfarbfeld in dem erfassten Referenzfarbstreifen zu erfassen, eine weitere Farbe aus dem erfassten weiteren Referenzfarbfeld zu extrahieren, die extrahierte weitere Farbe mit der weiteren vorbestimmten Referenzfarbe zu vergleichen, um eine weitere Farbabweichung zu erhalten, und den Farbstich des Gesichtsbildes ferner auf der Basis der weiteren Farbabweichung zu reduzieren. Die weitere vorbestimmte Referenzfarbe des weiteren Referenzfarbfeldes unterscheidet sich von der Referenzfarbe des Referenzfarbfeldes. Dadurch wird der Vorteil erreicht, dass eine verbesserte Farbtransformation zum Reduzieren des Farbstichs des Gesichtsbildes durchgeführt werden kann. Insbesondere kann zusätzlich eine Skalierung der Farben des Gesichtsbildes in einem Farbraum durchgeführt werden.

Gemäß einer Ausführungsform weist der Referenzfarbstreifen eine vorbestimmte geometrische Form auf, wobei der Prozessor ausgebildet ist, den Referenzfarbstreifen in dem Gesichtsbild auf der Basis der vorbestimmten geometrischen Form zu erfassen. Dadurch wird der Vorteil erreicht, dass der Referenzfarbstreifen beispielsweise unter Verwendung einer Mustererkennung oder einer Kantenerkennung effizient erfasst werden kann. Der erfasste Referenzfarbstreifen kann ferner perspektivisch entzerrt werden.

Gemäß einer Ausführungsform umfasst der Referenzfarbstreifen ein Texturfeld, wobei das Texturfeld eine vorbestimmte geometrische Textur aufweist, und wobei der Prozessor ausgebildet ist, den Referenzfarbstreifen in dem Gesichtsbild auf der Basis der vorbestimmten geometrischen Textur zu erfassen. Dadurch wird der Vorteil erreicht, dass der Referenzfarbstreifen beispielsweise unter Verwendung einer Mustererkennung oder einer Kantenerkennung effizient erfasst werden kann. Der erfasste Referenzfarbstreifen wird ferner perspektivisch entzerrt.

Gemäß einer Ausführungsform ist der Prozessor ausgebildet, das Gesicht der Person in dem Gesichtsbild zu erfassen, einen Ausschnitt des Gesichtsbildes zu bestimmen, wobei der Ausschnitt das erfasste Gesicht der Person umfasst, und wobei der Ausschnitt den erfassten Referenzfarbstreifen nicht umfasst, und das korrigierte Gesichtsbild auf den bestimmten Ausschnitt zu begrenzen. Dadurch wird der Vorteil erreicht, dass das korrigierte Gesichtsbild unmittelbar für Anwendungen verwendet werden kann, in welchen der Referenzfarbstreifen nicht sichtbar sein sollte. Der Ausschnitt kann beispielsweise rechteckförmig sein. Das Bestimmen des Ausschnitts kann dabei in dem ursprünglichen erfassten Gesichtsbild oder in dem korrigierten Gesichtsbild erfolgen.

Gemäß einer Ausführungsform ist der Prozessor ausgebildet, eine Position des erfassten Referenzfarbstreifens in dem Gesichtsbild, insbesondere dem ursprünglich erfassten Gesichtsbild, oder dem korrigierten Gesichtsbild zu bestimmen, und den Referenzfarbstreifen an der bestimmten Position in dem korrigierten Gesichtsbild durch eine vorbestimmte Farbe zu ersetzen. Dadurch wird der Vorteil erreicht, dass das korrigierte Gesichtsbild unmittelbar für Anwendungen verwendet werden kann, in welchen der Referenzfarbstreifen nicht sichtbar sein sollte.

Gemäß einer Ausführungsform ist der Prozessor ausgebildet, eine Position des erfassten Referenzfarbstreifens in dem Gesichtsbild, insbesondere dem ursprünglich erfassten Gesichtsbild, oder dem korrigierten Gesichtsbild zu bestimmen, und den Referenzfarbstreifen an der bestimmten Position in dem korrigierten Gesichtsbild durch eine Hintergrundfarbe des korrigierten Gesichtsbildes zu ersetzen. Dadurch wird der Vorteil erreicht, dass das korrigierte Gesichtsbild unmittelbar für Anwendungen verwendet werden kann, in welchen der Referenzfarbstreifen nicht sichtbar sein sollte.

Gemäß einer Ausführungsform ist der Prozessor ausgebildet, die Hintergrundfarbe des korrigierten Gesichtsbildes zu bestimmen. Dies kann beispielsweise unter Bestimmen eines größten zusammenhängenden Gebietes des korrigierten Gesichtsbildes, in dem alle Bildpunkte innerhalb eines vorherbestimmten Farbintervalls liegen, erfolgen, wobei dann ein Durchschnittswert oder ein häufigster Farbwert innerhalb des Farbintervalls als Hintergrundfarbe ausgewählt werden kann. Dadurch wird der Vorteil erreicht, dass die Hintergrundfarbe jeweils dynamisch für ein korrigiertes Gesichtsbild bestimmt werden kann.

Gemäß einer Ausführungsform ist die Farbabweichung durch eine euklidische Distanz zwischen Farbkoordinaten der extrahierten Farbe und Farbkoordinaten der vorbestimmten Referenzfarbe gebildet. Dadurch wird der Vorteil erreicht, dass die Farbabweichung effizient durch den Prozessor bestimmt werden kann.

Gemäß einer Ausführungsform ist die weitere Farbabweichung durch eine weitere euklidische Distanz zwischen Farbkoordinaten der extrahierten weiteren Farbe und Farbkoordinaten der weiteren vorbestimmten Referenzfarbe gebildet. Dadurch wird der Vorteil erreicht, dass die weitere Farbabweichung effizient durch den Prozessor bestimmt werden kann.

Gemäß einer Ausführungsform ist der Prozessor ausgebildet, das Gesichtsbild in einen CIE L*a*b*-Farbraum zu konvertieren. Dadurch wird der Vorteil erreicht, dass das Gesichtsbild effizient weiterverarbeitet werden kann. Das Gesichtsbild kann beispielsweise ursprünglich in einem sRGB-Farbraum oder AdobeRGB-Farbraum vorliegen.

Gemäß einer Ausführungsform ist der Prozessor ausgebildet, das korrigierte Gesichtsbild in einen CIE L*a*b*-Farbraum zu konvertieren. Dadurch wird der Vorteil erreicht, dass das korrigierte Gesichtsbild effizient weiterverarbeitet werden kann.

Gemäß einer Ausführungsform ist die vorbestimmte Referenzfarbe in einem CIE L*a*b*-Farbraum darstellbar, wobei die vorbestimmte Referenzfarbe eine a*-Farbkoordinate zwischen 5 und 14 und eine b*-Farbkoordinate zwischen 10 und 24 aufweist. Dadurch wird der Vorteil erreicht, dass ein Farbstich einer Hautfarbe effizient reduziert werden kann.

Gemäß einer Ausführungsform ist die weitere vorbestimmte Referenzfarbe in einem CIE L*a*b*-Farbraum darstellbar, wobei die weitere vorbestimmte Referenzfarbe eine a*-Farbkoordinate zwischen 5 und 14 und eine b*-Farbkoordinate zwischen 10 und 24 aufweist. Dadurch wird der Vorteil erreicht, dass ein Farbstich einer Hautfarbe effizient reduziert werden kann.

Soweit in diesem Dokument auf den CIE L*a*b*-Farbraum Bezug genommen wird, ist insbesondere von dem in EN ISO 11664-4 in der Version vom Juli 2011 normierten Farbraum die Rede.

Sowohl für die vorbestimmte Referenzfarbe als auch für die weitere vorbestimmte Referenzfarbe können beispielsweise Referenzfarben mit folgenden Farbkoordinaten {a*, b*} verwendet werden: {5, 10}, {5, 15}, {5, 20}, {5, 24}, {10, 10}, {10, 15}, {10, 20}, {10, 24}, {14, 10}, {14, 15}, {14, 20}, {14, 24}. Insbesondere können die standardisierten X-Rite bzw. Macbeth ColorChecker Classic Referenzfarben mit den Nummern 1, 2, 4, 7 und/oder 10 verwendet werden.

Gemäß einer Ausführungsform umfasst die Vorrichtung eine Kommunikationsschnittstelle, welche ausgebildet ist, das Gesichtsbild über ein Kommunikationsnetzwerk zu empfangen, und das Gesichtsbild in dem Speicher abzulegen. Dadurch wird der Vorteil erreicht, dass das Gesichtsbild mit dem Gesicht der Person sowie dem Referenzfarbstreifen an einem beliebigen Ort erfasst und vorverarbeitet werden kann und ein Farbstich des Gesichtsbildes zentral durch die Vorrichtung reduziert werden kann. Das Kommunikationsnetzwerk kann beispielsweise das Internet sein.

Gemäß einem zweiten Aspekt betrifft die Erfindung eine Zugangskontrollanordnung. Die Zugangskontrollanordnung umfasst eine Bildkamera, welche ausgebildet ist, ein Gesichtsbild einer Person zu erfassen, wobei das Gesichtsbild ein Abbild eines Gesichts der Person und eines Referenzfarbstreifens umfasst, und eine Vorrichtung gemäß dem ersten Aspekt der Erfindung, wobei die Vorrichtung ausgebildet ist, einen Farbstich des Gesichtsbildes der Person zu reduzieren, um ein korrigiertes Gesichtsbild zu erhalten. Beispielsweise kann der Referenzfarbstreifen auf einem Dienst- oder Mitgliedsausweis der Person, die diese vorweist und dabei in einen Erfassungsbereich der Bildkamera hält, um Zugang zu erhalten, aufgebracht sein.

Gemäß einer Ausführungsform ist der Referenzfarbstreifen Teil der Zugangskontrollanordnung und in einem Erfassungsbereich der Bildkamera, beispielsweise auf der Zugangskontrollanordnung, angeordnet. Dadurch wird der Vorteil erreicht, dass die Position des Referenzfarbstreifens in dem Gesichtsbild vorbekannt sein kann.

Gemäß einer Ausführungsform umfasst die Zugangskontrollanordnung eine Identifizierungseinrichtung, welche ausgebildet ist, das korrigierte Gesichtsbild der Person mit einem vorgespeicherten Referenzgesichtsbild zu vergleichen, um die Person zu identifizieren. Dadurch wird der Vorteil erreicht, dass eine effiziente Identifizierung der Person mittels eines Gesichtserkennungsalgorithmus realisiert werden kann. Das korrigierte Gesichtsbild und das vorgespeicherte Referenzgesichtsbild können hierbei Farbbilder sein.

Gemäß einer Ausführungsform umfasst die Zugangskontrollanordnung eine Beleuchtungseinrichtung, welche ausgebildet ist, das Gesicht der Person und den Referenzfarbstreifen mit Licht einer vorbestimmten Farbtemperatur zu beleuchten. Dadurch wird der Vorteil erreicht, dass der Farbstich des erfassten Gesichtsbildes bereits in seinem Ursprung reduziert werden kann. Das Gesicht der Person und der Referenzfarbstreifen können auf identische Weise beleuchtet werden. Die vorbestimmte Farbtemperatur kann beispielsweise 6504 K betragen.

Gemäß einer Ausführungsform weist das Licht der Beleuchtungseinrichtung ein vorbestimmtes Emissionsspektrum auf. Dadurch wird der Vorteil erreicht, dass die Reduzierung des Farbstichs effizient durchgeführt werden kann. Das vorbestimmte Emissionsspektrum kann beispielsweise ein D65-Emissionsspektrum sein.

Gemäß einem dritten Aspekt betrifft die Erfindung ein Verfahren zum Reduzieren eines Farbstichs eines Gesichtsbildes einer Person unter Verwendung einer Vorrichtung, wobei das Gesichtsbild ein Abbild eines Gesichts der Person und eines Referenzfarbstreifens umfasst, wobei der Referenzfarbstreifen ein Referenzfarbfeld umfasst, und wobei dem Referenzfarbfeld eine vorbestimmte Referenzfarbe zugeordnet ist. Die Vorrichtung umfasst einen Speicher und einen Prozessor, wobei der Speicher ausgebildet ist, das Gesichtsbild zu speichern. Das Verfahren umfasst ein Erfassen des Referenzfarbstreifens in dem Gesichtsbild durch den Prozessor, ein Erfassen des Referenzfarbfeldes in dem erfassten Referenzfarbstreifen durch den Prozessor, ein Extrahieren einer Farbe aus dem erfassten Referenzfarbfeld durch den Prozessor, ein Vergleichen der extrahierten Farbe mit der vorbestimmten Referenzfarbe durch den Prozessor, um eine Farbabweichung zu erhalten, und ein Reduzieren des Farbstichs des Gesichtsbildes auf der Basis der Farbabweichung durch den Prozessor, um ein korrigiertes Gesichtsbild zu erhalten.

Das Verfahren kann durch die Vorrichtung und/oder die Zugangskontrollanordnung ausgeführt werden. Weitere Merkmale des Verfahrens resultieren unmittelbar aus den Merkmalen bzw. der Funktionalität der Vorrichtung und/oder der Zugangskontrollanordnung.

Gemäß einem vierten Aspekt betrifft die Erfindung ein Computerprogramm mit einem Programmcode zum Ausführen des Verfahrens gemäß dem dritten Aspekt der Erfindung. Die Vorrichtung und/oder die Zugangskontrollanordnung können programmtechnisch eingerichtet sein, um den Programmcode auszuführen.

Die Erfindung kann in Hardware und/oder Software implementiert werden.

Weitere Ausführungsbeispiele werden Bezug nehmend auf die beiliegenden Zeichnungen näher erläutert. Es zeigen:
Fig. 1 ein schematisches Diagramm einer Vorrichtung zum Reduzieren eines Farbstichs eines Gesichtsbildes einer Person;
Fig. 2 ein schematisches Diagramm einer Zugangskontrollanordnung mit einer Vorrichtung, einer Bildkamera, einer Identifizierungseinrichtung und einer Beleuchtungseinrichtung;
Fig. 3 ein schematisches Diagramm eines Verfahrens zum Reduzieren eines Farbstichs eines Gesichtsbildes einer Person unter Verwendung einer Vorrichtung;
Fig. 4 ein schematisches Diagramm eines Gesichtsbildes mit einem Abbild eines Gesichts einer Person und eines Referenzfarbstreifens;
Fig. 5 ein schematisches Diagramm eines Referenzfarbstreifens mit einer Mehrzahl von Referenzfarbfeldern;
Fig. 6 ein schematisches Diagramm eines Referenzfarbstreifens mit einer Mehrzahl von Referenzfarbfeldern;
Fig. 7 ein schematisches Diagramm eines Schnitts eines CIE L*a*b*-Farbraums mit einer a*-Farbkoordinate und einer b*-Farbkoordinate; und
Fig. 8 ein schematisches Diagramm eines Schnitts eines CIE L*a*b*-Farbraums mit einer a*-Farbkoordinate und einer b*-Farbkoordinate.

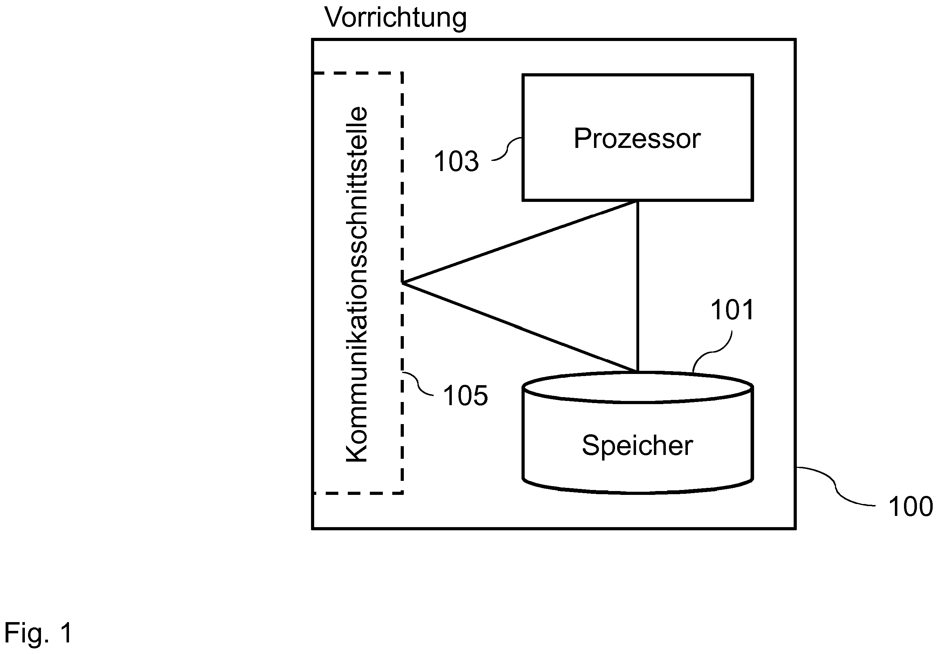

Fig. 1 zeigt ein schematisches Diagramm einer Vorrichtung 100 zum Reduzieren eines Farbstichs eines Gesichtsbildes einer Person, wobei das Gesichtsbild ein Abbild eines Gesichts der Person und eines Referenzfarbstreifens umfasst. Der Referenzfarbstreifen umfasst ein Referenzfarbfeld, wobei dem Referenzfarbfeld eine vorbestimmte Referenzfarbe zugeordnet ist. Die Vorrichtung 100 umfasst einen Speicher 101, welcher ausgebildet ist, das Gesichtsbild zu speichern. Die Vorrichtung 100 umfasst ferner einen Prozessor 103, welcher ausgebildet ist, den Referenzfarbstreifen in dem Gesichtsbild zu erfassen, das Referenzfarbfeld in dem erfassten Referenzfarbstreifen zu erfassen, eine Farbe aus dem erfassten Referenzfarbfeld zu extrahieren, die extrahierte Farbe mit der vorbestimmten Referenzfarbe zu vergleichen, um eine Farbabweichung zu erhalten, und den Farbstich des Gesichtsbildes auf der Basis der Farbabweichung zu reduzieren, um ein korrigiertes Gesichtsbild zu erhalten. Die Vorrichtung 100 umfasst ferner eine Kommunikationsschnittstelle 105, welche ausgebildet ist, das Gesichtsbild über ein Kommunikationsnetzwerk zu empfangen, und das Gesichtsbild in dem Speicher 101 abzulegen.

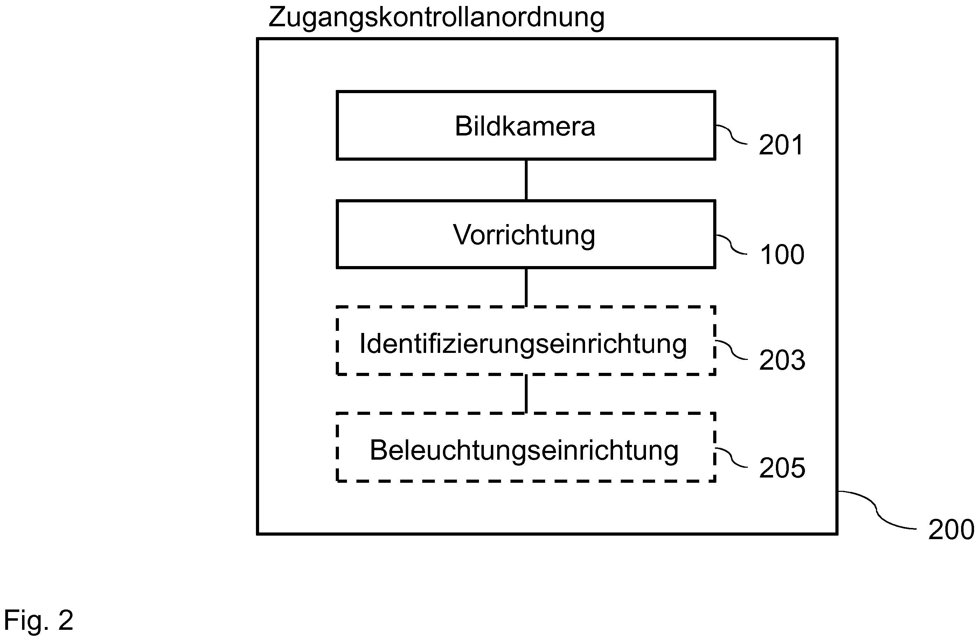

Fig. 2 zeigt ein schematisches Diagramm einer Zugangskontrollanordnung 200 mit einer Vorrichtung 100, einer Bildkamera 201, einer Identifizierungseinrichtung 203 und einer Beleuchtungseinrichtung 205. Die Bildkamera 201 ist ausgebildet, ein Gesichtsbild einer Person zu erfassen, wobei das Gesichtsbild ein Abbild eines Gesichts der Person und eines Referenzfarbstreifens umfasst. Die Vorrichtung 100 ist ausgebildet, einen Farbstich des Gesichtsbildes der Person zu reduzieren, um ein korrigiertes Gesichtsbild zu erhalten. Die Identifizierungseinrichtung 203 ist ausgebildet, das korrigierte Gesichtsbild der Person mit einem vorgespeicherten Referenzgesichtsbild zu vergleichen, um die Person zu identifizieren. Die Beleuchtungseinrichtung 205 ist ausgebildet, das Gesicht der Person und den Referenzfarbstreifen mit Licht einer vorbestimmten Farbtemperatur zu beleuchten. Das Licht kann ferner ein vorbestimmtes Emissionsspektrum aufweisen.

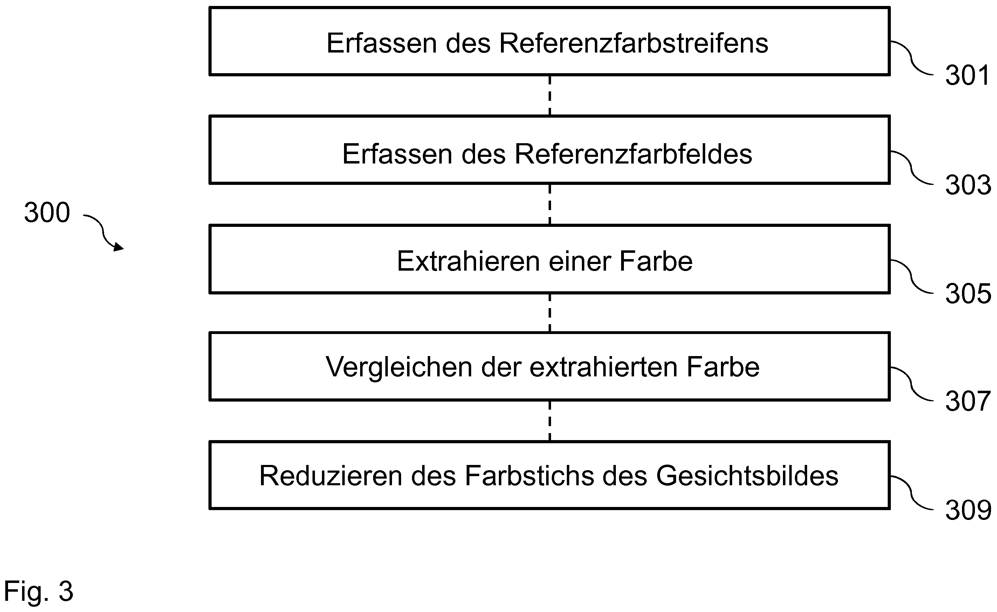

Fig. 3 zeigt ein schematisches Diagramm eines Verfahrens 300 zum Reduzieren eines Farbstichs eines Gesichtsbildes einer Person unter Verwendung einer Vorrichtung, wobei das Gesichtsbild ein Abbild eines Gesichts der Person und eines Referenzfarbstreifens umfasst, wobei der Referenzfarbstreifen ein Referenzfarbfeld umfasst, und wobei dem Referenzfarbfeld eine vorbestimmte Referenzfarbe zugeordnet ist. Die Vorrichtung umfasst einen Speicher und einen Prozessor, wobei der Speicher ausgebildet ist, das Gesichtsbild zu speichern. Das Verfahren 300 umfasst ein Erfassen 301 des Referenzfarbstreifens in dem Gesichtsbild durch den Prozessor, ein Erfassen 303 des Referenzfarbfeldes in dem erfassten Referenzfarbstreifen durch den Prozessor, ein Extrahieren 305 einer Farbe aus dem erfassten Referenzfarbfeld durch den Prozessor, ein Vergleichen 307 der extrahierten Farbe mit der vorbestimmten Referenzfarbe durch den Prozessor, um eine Farbabweichung zu erhalten, und ein Reduzieren 309 des Farbstichs des Gesichtsbildes auf der Basis der Farbabweichung durch den Prozessor, um ein korrigiertes Gesichtsbild zu erhalten. Das Verfahren 300 kann durch die Vorrichtung und/oder die Zugangskontrollanordnung ausgeführt werden.

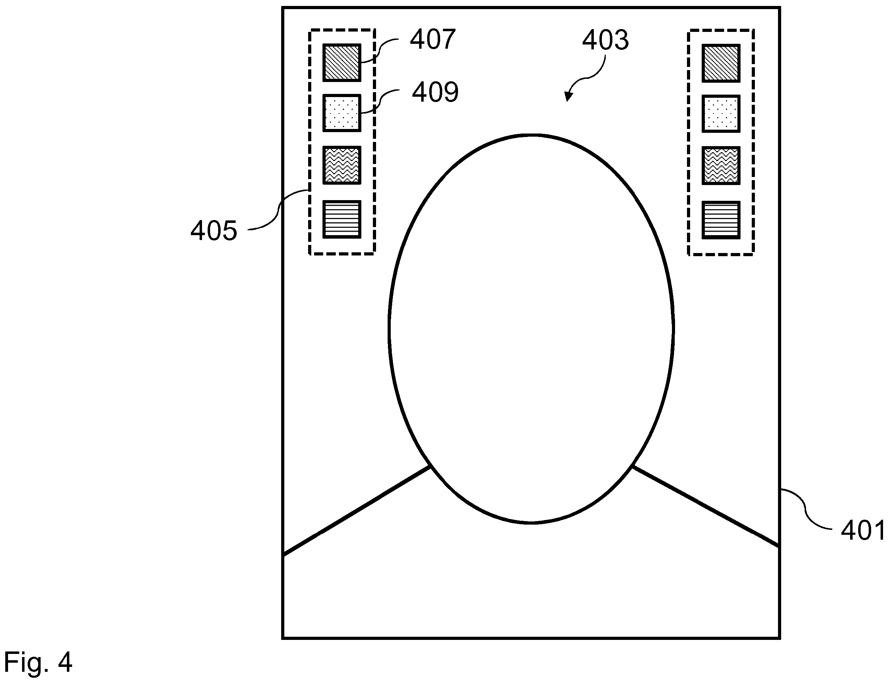

Fig. 4 zeigt ein schematisches Diagramm eines Gesichtsbildes 401 mit einem Abbild eines Gesichts 403 einer Person und eines Referenzfarbstreifens 405. Der Referenzfarbstreifen 405 umfasst ein Referenzfarbfeld 407, welchem eine vorbestimmte Referenzfarbe zugeordnet ist, und ein weiteres Referenzfarbfeld 409, welchem eine weitere vorbestimmte Referenzfarbe zugeordnet ist. Der Referenzfarbstreifen 405 kann weitere Referenzfarbfelder aufweisen. Ferner kann das Gesichtsbild 401 ein Abbild eines weiteren derartigen Referenzstreifens umfassen.

Der Referenzfarbstreifen 405 und/oder der weitere Referenzfarbstreifen können ferner ein Texturfeld umfassen, wobei das Texturfeld eine vorbestimmte geometrische Textur aufweisen kann. Die vorbestimmte geometrische Textur kann beispielsweise ein zweidimensionales Muster mit einer Mehrzahl von Punkten oder Linien sein. Die vorbestimmte geometrische Textur kann ferner eine Orientierung des Referenzfarbstreifens 405 oder des weiteren Referenzfarbstreifens anzeigen. Der Prozessor kann ausgebildet sein, den Referenzfarbstreifen 405 oder den weiteren Referenzfarbstreifen in dem Gesichtsbild 401 auf der Basis der vorbestimmten geometrischen Textur zu erfassen, beispielsweise unter Verwendung einer Mustererkennung oder einer Kantenerkennung.

Der Referenzfarbstreifen 405 und/oder der weitere Referenzfarbstreifen werden typischerweise bei der Erfassung des Gesichtsbildes 401 in einer Umgebung der Person angeordnet, sodass diese in dem Gesichtsbild 401 sichtbar sind.

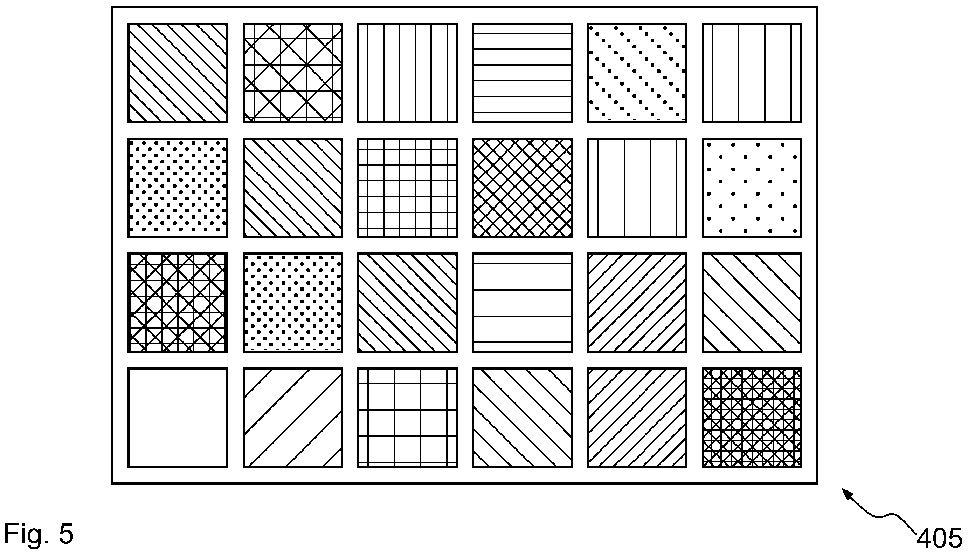

Fig. 5 zeigt ein schematisches Diagramm eines Referenzfarbstreifens 405 mit einer Mehrzahl von Referenzfarbfeldern. Der Referenzfarbstreifen 405 wird durch einen standardisierten X-Rite bzw. Macbeth ColorChecker Classic gebildet. Der Mehrzahl von Referenzfarbfeldern ist eine Mehrzahl von vorbestimmten Referenzfarben zugeordnet.

Die vorbestimmten Referenzfarben des X-Rite bzw. Macbeth ColorChecker Classic weisen gemäß einer Ausführungsform (vor November 2014) in einem CIE L*a*b*-Farbraum die folgenden Werte für die Farbkoordinaten {L*, a*, b*} auf:

| Feldbezeichnung | L* | a* | b* |
|---|---|---|---|
| A1 | 37,986 | 13,555 | 14,059 |
| A2 | 62,661 | 36,067 | 57,096 |
| A3 | 28,778 | 14,179 | -50,297 |
| A4 | 96,539 | -0,425 | 1,186 |
| B1 | 65,711 | 18,13 | 17,81 |
| B2 | 40,02 | 10,41 | -45,964 |
| B3 | 55,261 | -38,342 | 31,37 |
| B4 | 81,257 | -0,638 | -0,335 |
| C1 | 49,927 | -4,88 | -21,905 |
| C2 | 51,124 | 48,239 | 16,248 |
| C3 | 42,101 | 53,378 | 28,19 |
| C4 | 66,766 | -0,734 | -0,504 |
| D1 | 43,139 | -13,095 | 21,905 |
| D2 | 30,325 | 22,976 | -21,587 |
| D3 | 81,733 | 4,039 | 79,819 |
| D4 | 50,867 | -0,153 | -0,27 |
| E1 | 55,112 | 8,844 | -25,399 |
| E2 | 72,532 | -23,709 | 57,255 |
| E3 | 51,935 | 49,986 | -14,574 |
| E4 | 35,656 | -0,421 | -1,231 |
| F1 | 70,719 | -33,397 | -0,199 |
| F2 | 71,941 | 19,363 | 67,857 |
| F3 | 51,038 | -28,631 | -28,638 |
| F4 | 20,461 | -0,079 | -0,973 |

Die vorbestimmten Referenzfarben des X-Rite bzw. Macbeth ColorChecker Classic weisen gemäß einer weiteren Ausführungsform (ab November 2014) in einem CIE L*a*b*-Farbraum die folgenden Werte für die Farbkoordinaten {L*, a*, b*} auf:

| Feldbezeichnung | L* | a* | b* |
|---|---|---|---|
| A1 | 37,54 | 14,37 | 14,92 |
| A2 | 62,73 | 35,83 | 56,5 |
| A3 | 28,37 | 15,42 | -49,8 |
| A4 | 95,19 | -1,03 | 2,93 |
| B1 | 64,66 | 19,27 | 17,5 |
| B2 | 39,43 | 10,75 | -45,17 |
| B3 | 54,38 | -39,72 | 32,27 |
| B4 | 81,29 | -0,57 | 0,44 |
| C1 | 49,32 | -3,82 | -22,54 |
| C2 | 50,57 | 48,64 | 16,67 |
| C3 | 42,43 | 51,05 | 28,62 |
| C4 | 66,89 | -0,75 | -0,06 |
| D1 | 43,46 | -12,74 | 22,72 |
| D2 | 30,1 | 22,54 | -20,87 |
| D3 | 81,8 | 2,67 | 80,41 |
| D4 | 50,76 | -0,13 | 0,14 |
| E1 | 54,94 | 9,61 | -24,79 |
| E2 | 71,77 | -24,13 | 58,19 |
| E3 | 50,63 | 51,28 | -14,12 |
| E4 | 35,63 | -0,46 | -0,48 |
| F1 | 70,48 | -32,26 | -0,37 |
| F2 | 71,51 | 18,24 | 67,37 |
| F3 | 49,57 | -29,71 | -28,32 |
| F4 | 20,64 | 0,07 | -0,46 |

Die X-Rite bzw. Macbeth ColorChecker Classic Referenzfarbe mit der Nummer 1 trägt die Feldbezeichnung A1, die Referenzfarbe mit der Nummer 2 trägt die Feldbezeichnung B1, die Referenzfarbe mit der Nummer 4 trägt die Feldbezeichnung D1, die Referenzfarbe mit der Nummer 7 trägt die Feldbezeichnung A2 und die Referenzfarbe mit der Nummer 10 trägt die Feldbezeichnung D2.

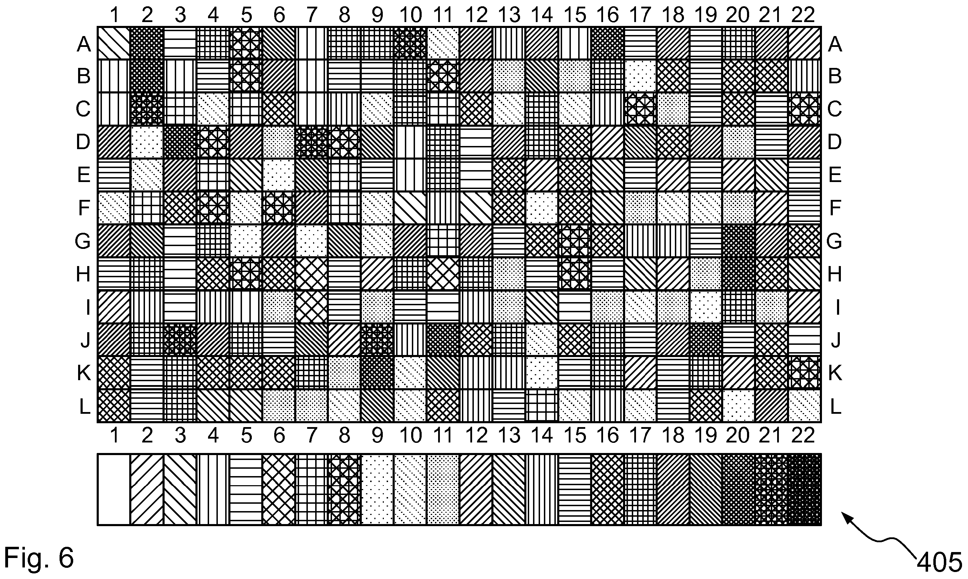

Fig. 6 zeigt ein schematisches Diagramm eines Referenzfarbstreifens 405 mit einer Mehrzahl von Referenzfarbfeldern. Der Referenzfarbstreifen 405 wird durch einen standardisierten Referenzfarbstreifen gemäß IEC 61966-8 gebildet. Der Mehrzahl von Referenzfarbfeldern ist eine Mehrzahl von vorbestimmten Referenzfarben zugeordnet.

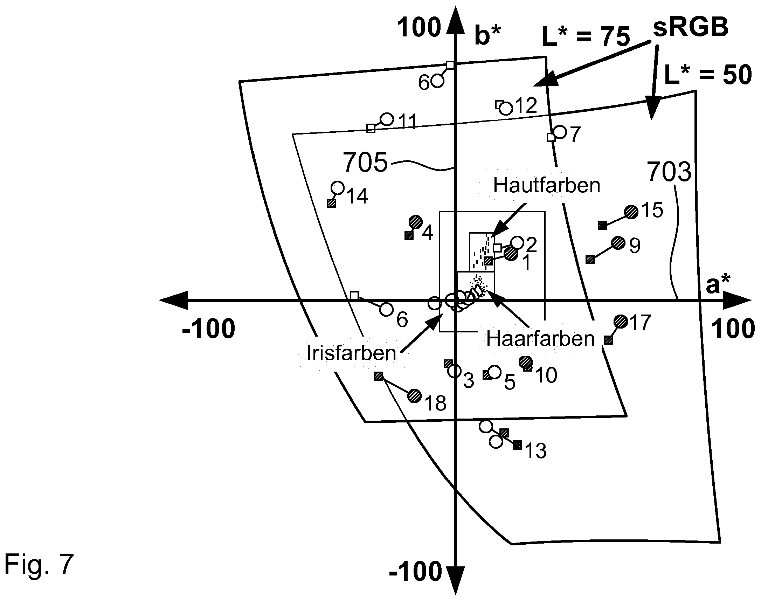

Fig. 7 zeigt ein schematisches Diagramm eines Schnitts eines CIE L*a*b*-Farbraums 701 mit einer a*-Farbkoordinate 703 und einer b*-Farbkoordinate 705. In dem Diagramm sind typische Hautfarben, Haarfarben und Irisfarben eines Menschen hervorgehoben. Ferner sind sRGB-Farbbereiche für eine Luminanz L* von 50 und 75 dargestellt.

Der CIE L*a*b*-Farbraum 701 basiert auf dem Prinzip, dass Gegenfarben wie beispielsweise Rot/Grün (für a*) oder Gelb/Blau (für b*) existieren. Der "*" bezeichnet dabei einen dualen Vektorraum. L* bezeichnet die Luminanz, welche eine wahrgenommene Helligkeit eines Pixels unabhängig vom Farbwert repräsentiert.

Hautfarben befinden sich typischerweise in einem Bereich mit einer a*-Farbkoordinate zwischen 5 und 14 und einer b*-Farbkoordinate zwischen 10 und 24. Haarfarben befinden sich typischerweise in einem Bereich mit einer a*-Farbkoordinate und einer b*-Farbkoordinate zwischen -5 und 15. Irisfarben befinden sich typischerweise in einem Bereich mit einer a*-Farbkoordinate und einer b*-Farbkoordinate zwischen -10 und 30.

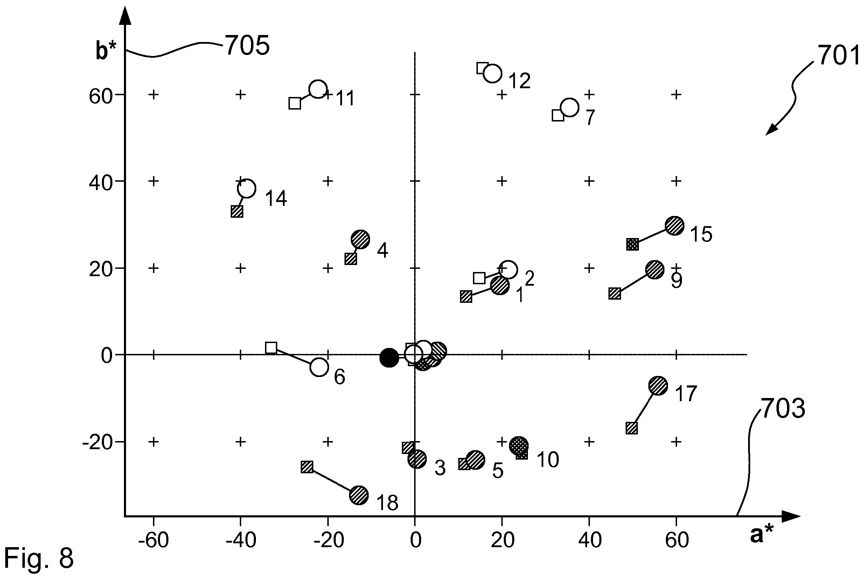

Fig. 8 zeigt ein schematisches Diagramm eines Schnitts eines CIE L*a*b*-Farbraums 701 mit einer a*-Farbkoordinate 703 und einer b*-Farbkoordinate 705. Die Quadrate repräsentieren jeweils eine vorbestimmte Referenzfarbe. Die Kreise repräsentieren jeweils eine zugehörige extrahierte Farbe aus einem Gesichtsbild.

Der Prozessor kann ausgebildet sein, jeweils eine Farbabweichung zu bestimmen, welche jeweils durch eine euklidische Distanz zwischen Farbkoordinaten der jeweiligen extrahierten Farbe und Farbkoordinaten der zugehörigen vorbestimmten Referenzfarbe gebildet sein kann. Durch die Reduzierung des Farbstichs des Gesichtsbildes durch den Prozessor können die durch Kreise bezeichneten extrahierten Farben mit den durch Quadrate bezeichneten vorbestimmten Referenzfarben in Übereinstimmung gebracht werden. Dies kann beispielsweise mittels einer Farbtransformation, insbesondere einer Verschiebung, Skalierung und/oder Drehung im Farbraum, realisiert werden.

Das Konzept ermöglicht auf unkomplizierte Weise und mit geringem Aufwand, dass ein Gesichtsbild 401, beispielsweise bei einer Registrierung, aber auch für Verifikationszwecke etwa mittels einer Zugangskontrollanordnung 200, derart erfasst werden kann, dass realistischen Farben, insbesondere von Haut und Haar, auch nach einem Ausdrucken und Einscannen restauriert werden können.

Bei der präzisen Erfassung von Farben erweisen sich insbesondere die Lichtverhältnisse als Herausforderung. Theoretisch sollte bei einer Erfassung eines Gesichtsbildes 401 als Referenzbild ein Emissionsspektrum von Licht wie beispielsweise D65 zum Einsatz kommen. In der Praxis ist dies jedoch bei heterogenen Systemen, wie beispielsweise bei der Beantragung eines Identifikationsdokumentes, schwierig zu realisieren. Das Licht weist typischerweise Eigenschaften auf, die schwierig vorherzusehen sind. Bereits die Realisierung einer gleichmäßigen Beleuchtung sowie die Vermeidung von übermäßigem Schattenwurf in Augenhöhlen oder Reflexionen auf einer Brille sind beispielsweise für Passbehörden eine Herausforderung.

Im CIE L*a*b*-Farbraum 701 liegen die Haut-, Haar- und Irisfarben eines Menschen typischerweise in einem vergleichsweise engen Bereich. Bereits durch eine Reduzierung eines Farbstichs unter Verwendung eines X-Rite bzw. Macbeth ColorCheckers Classic als Referenzfarbstreifen 405, insbesondere mittels der Referenzfarbfelder mit Nummern 1 und 2, wird die Farbqualität für Hautfarben deutlich verbessert. Alternativ kann auch ein anderer Referenzfarbstreifen 405 verwendet werden, beispielsweise ein Referenzfarbstreifen nach IEC 61966-8 in der Version vom Februar 2001. Werden zusätzlich zu den Referenzfarbfeldern mit Nummer 1 und 2 noch die drei Referenzfarbfelder mit Nummern 4, 7 und 10 des X-Rite bzw. Macbeth ColorCheckers Classic verwendet, kann die Farbqualität nochmals verbessert werden. Auf die Auswertung weiterer Referenzfarbfelder kann gegebenenfalls verzichtet werden.

An einer nicht störenden Stelle kann folglich ein Referenzfarbstreifen 405 mit zumindest einem Referenzfarbfeld 407, 409, beispielsweise zwei oder fünf Referenzfarbfeldern, angeordnet werden, welcher wie das Gesicht 403 der Person beleuchtet ist. Beispielsweise kann der Referenzfarbstreifen 405 bei der Erfassung des Gesichtsbildes 401 neben das Gesicht 403 der Person gehalten werden. Ferner kann beispielsweise der Referenzfarbstreifen 405 auf einer Rückwand angebracht sein, jedoch weit genug vom Gesicht 403 entfernt, um eine gegebenenfalls von einem Standard geforderte Uniformität des Hintergrundes einzuhalten. Die Rückwand und das Gesicht 403 können dabei gleichartig beleuchtet werden.

In bestimmten Umgebungen, wie beispielsweise bei bestimmten Zugangskontrollanordnungen, könnte eine Rückwand jedoch nicht praktikabel sein. Dort können jedoch beispielsweise zwei Bildkameras verwendet werden, wobei eine Bildkamera weitwinklig die gesamte Umgebung erfasst und das Gesicht 403 der Person findet, und wobei eine weitere Bildkamera anschließend nur das Gesicht 403 der Person hochauflösend erfasst. Im Sichtbereich einer Bildkamera 201 bzw. von Bildkameras kann mithin der Referenzfarbstreifen 405 sichtbar und wie das Gesicht 403 der Person beleuchtet sein. Wird eine Vereinzelungseinrichtung bei einer Zugangskontrollanordnung 200 verwendet, kann der Referenzfarbstreifen 405 beispielsweise an deren Rand oder an einem Torbogen am Eingang der Vereinzelungseinrichtung angeordnet sein. Bei Verwendung mehrerer Bildkameras können diese jeweils die gleiche Farbkalibrierung aufweisen.

Ist der Referenzfarbstreifen 405 in dem Gesichtsbild 401 sichtbar, kann er beispielsweise mit ausgedruckt werden. Dadurch werden die Farben typischerweise verfälscht. Bei einem nachfolgenden Einscannen des ausgedruckten Gesichtsbildes 401 werden diese noch weiter verfälscht. Im eingescannten Gesichtsbild 401 ist jedoch nun zumindest eine vorbestimmte Referenzfarbe mit originalen Farbkoordinaten bekannt. Folglich kann eine Korrektur von Farben, insbesondere eine Reduzierung eines Farbstichs, durchgeführt werden.

Wird nicht nur einen Referenzfarbfeld 407 mit einer vorbestimmten Referenzfarbe verwendet, sondern mehrere Referenzfarbfelder mit der vorbestimmten Referenzfarbe, können die jeweils extrahierten Farben ferner gemittelt werden. Ferner können Gesichtsbilder verschieden großer Personen ohne eine Umrüstung erfasst werden. Zusätzlich zu Intensitäts-, Textur- und Kontrastinformationen des Gesichtsbildes 401 kann folglich eine Farbinformation für eine Gesichtserkennung bzw. Identifikation einer Person herangezogen werden. Zudem wird auf einfache Weise erreicht, dass das Gesichtsbild 401 in einem Identifikationsdokument mit realistischen Farben dargestellt werden kann, selbst wenn im Verlaufe des Erfassungs- oder Vorverarbeitungsprozesses Farben verfälscht wurden. Insbesondere kann auf die Verwendung von farbkalibriertem Equipment im Erfassungs- oder Vorverarbeitungsprozess verzichtet werden.

Zusammenfassend kann beispielsweise in einem Sichtbereich einer Bildkamera 201 ein Referenzfarbstreifen 405 angeordnet sein, welcher Referenzfarbfelder 407, 409 mit vorbestimmten Referenzfarben aufweist. Der Referenzfarbstreifen 405 kann derart angeordnet sein, dass Farbkorrekturen im Gesichtsbild 401 unabhängig von der verwendeten Beleuchtung und Vorverarbeitungsschritten möglich sind.

Beispielsweise kann in einem Fotostudio auf einem einheitlich gefärbten Hintergrund an einer Position, welche weit genug vom Gesicht 403 entfernt ist, aber noch auf dem Gesichtsbild 401 sichtbar ist, der Referenzfarbstreifen 405 angebracht sein, welcher wie das Gesicht 403 beleuchtet ist. Der Referenzfarbstreifen 405 kann ein X-Rite bzw. Macbeth ColorChecker Classic Referenzfarbstreifen sein. Ferner kann ein weiterer derartiger Referenzfarbstreifen an einer anderen Seite des Gesichtes 403 angeordnet sein. Der Referenzfarbstreifen 405 kann bei der Erfassung des Gesichtsbildes 401 ferner neben das Gesicht 403 der Person gehalten werden. Bei Verwendung in einer Zugangskontrollanordnung 200 kann der Referenzfarbstreifen 405 beispielsweise auf einer der Bildkamera 201 zugewandten Seite eines Eingangstores einer Vereinzelungseinrichtung der Zugangskontrollanordnung 200 angeordnet sein. Folglich können zusätzliche Farbinformationen zur Gesichtserkennung bzw. Identifikation der Person verwendet werden.

### BEZUGSZEICHENLISTE

- 100: Vorrichtung
- 101: Speicher
- 103: Prozessor
- 105: Kommunikationsschnittstelle

- 200: Zugangskontrollanordnung
- 201: Bildkamera
- 203: Identifizierungseinrichtung
- 205: Beleuchtungseinrichtung

- 300: Verfahren zum Reduzieren eines Farbstichs eines Gesichtsbildes
- 301: Erfassen des Referenzfarbstreifens
- 303: Erfassen des Referenzfarbfeldes
- 305: Extrahieren einer Farbe
- 307: Vergleichen der extrahierten Farbe
- 309: Reduzieren des Farbstichs des Gesichtsbildes

- 401: Gesichtsbild
- 403: Gesicht
- 405: Referenzfarbstreifen
- 407: Referenzfarbfeld
- 409: Weiteres Referenzfarbfeld

- 701: CIE L*a*b*-Farbraum
- 703: a*-Farbkoordinate
- 705: b*-Farbkoordinate

## Patentansprüche

1. Vorrichtung (100) zum Reduzieren eines Farbstichs eines Gesichtsbildes (401) einer Person, wobei das Gesichtsbild (401) ein Abbild eines Gesichts (403) der Person und eines Referenzfarbstreifens (405) umfasst, wobei der Referenzfarbstreifen (405) ein Referenzfarbfeld (407) umfasst, und wobei dem Referenzfarbfeld (407) eine vorbestimmte Referenzfarbe zugeordnet ist, mit:
einem Speicher (101), welcher ausgebildet ist, das Gesichtsbild (401) zu speichern; und
einem Prozessor (103), welcher ausgebildet ist, den Referenzfarbstreifen (405) in dem Gesichtsbild (401) zu erfassen, das Referenzfarbfeld (407) in dem erfassten Referenzfarbstreifen (405) zu erfassen, eine Farbe aus dem erfassten Referenzfarbfeld (407) zu extrahieren, die extrahierte Farbe mit der vorbestimmten Referenzfarbe zu vergleichen, um eine Farbabweichung zu erhalten, und den Farbstich des Gesichtsbildes (401) auf der Basis der Farbabweichung zu reduzieren, um ein korrigiertes Gesichtsbild zu erhalten, **dadurch gekennzeichnet, dass**
der Prozessor (103) ausgebildet ist, den Referenzfarbstreifen (405) automatisiert aus dem korrigierten Gesichtsbild zu entfernen.

2. Vorrichtung (100) nach Anspruch 1, wobei der Referenzfarbstreifen (405) ein weiteres Referenzfarbfeld (409) umfasst, wobei dem weiteren Referenzfarbfeld (409) eine weitere vorbestimmte Referenzfarbe zugeordnet ist, und wobei der Prozessor (103) ausgebildet ist, das weitere Referenzfarbfeld (409) in dem erfassten Referenzfarbstreifen (405) zu erfassen, eine weitere Farbe aus dem erfassten weiteren Referenzfarbfeld (409) zu extrahieren, die extrahierte weitere Farbe mit der weiteren vorbestimmten Referenzfarbe zu vergleichen, um eine weitere Farbabweichung zu erhalten, und den Farbstich des Gesichtsbildes (401) ferner auf der Basis der weiteren Farbabweichung zu reduzieren.

3. Vorrichtung (100) nach einem der vorstehenden Ansprüche, wobei der Referenzfarbstreifen (405) eine vorbestimmte geometrische Form aufweist, und wobei der Prozessor (103) ausgebildet ist, den Referenzfarbstreifen (405) in dem Gesichtsbild (401) auf der Basis der vorbestimmten geometrischen Form zu erfassen.

4. Vorrichtung (100) nach einem der vorstehenden Ansprüche, wobei der Prozessor (103) ausgebildet ist, das Gesicht (403) der Person in dem Gesichtsbild (401) zu erfassen, einen Ausschnitt des Gesichtsbildes (401) zu bestimmen, wobei der Ausschnitt das erfasste Gesicht (403) der Person umfasst, und wobei der Ausschnitt den erfassten Referenzfarbstreifen (405) nicht umfasst, und das korrigierte Gesichtsbild auf den bestimmten Ausschnitt zu begrenzen.

5. Vorrichtung (100) nach einem der vorstehenden Ansprüche, wobei der Prozessor (103) ausgebildet ist, eine Position des erfassten Referenzfarbstreifens (405) in dem Gesichtsbild (401) oder dem korrigierten Gesichtsbild zu bestimmen, und den Referenzfarbstreifen (405) an der bestimmten Position in dem korrigierten Gesichtsbild durch eine vorbestimmte Farbe zu ersetzen.

6. Vorrichtung (100) nach einem der vorstehenden Ansprüche, wobei die Farbabweichung durch eine euklidische Distanz zwischen Farbkoordinaten (703, 705) der extrahierten Farbe und Farbkoordinaten (703, 705) der vorbestimmten Referenzfarbe gebildet ist.

7. Vorrichtung (100) nach einem der vorstehenden Ansprüche, wobei der Prozessor (103) ausgebildet ist, das Gesichtsbild (401) in einen CIE L*a*b*-Farbraum (701) zu konvertieren.

8. Vorrichtung (100) nach einem der vorstehenden Ansprüche, wobei die vorbestimmte Referenzfarbe in einem CIE L*a*b*-Farbraum (701) darstellbar ist, und wobei die vorbestimmte Referenzfarbe eine a*-Farbkoordinate (703) zwischen 5 und 14 und eine b*-Farbkoordinate (705) zwischen 10 und 24 aufweist.

9. Vorrichtung (100) nach einem der vorstehenden Ansprüche, mit:
einer Kommunikationsschnittstelle (105), welche ausgebildet ist, das Gesichtsbild (401) über ein Kommunikationsnetzwerk zu empfangen, und das Gesichtsbild (401) in dem Speicher (101) abzulegen.

10. Zugangskontrollanordnung (200), mit:
einer Bildkamera (201), welche ausgebildet ist, ein Gesichtsbild (401) einer Person zu erfassen, wobei das Gesichtsbild (401) ein Abbild eines Gesichts (403) der Person und eines Referenzfarbstreifens (405) umfasst; und
einer Vorrichtung (100) nach einem der Ansprüche 1 bis 9, wobei die Vorrichtung (100) ausgebildet ist, einen Farbstich des Gesichtsbildes (401) der Person zu reduzieren, um ein korrigiertes Gesichtsbild zu erhalten.

11. Zugangskontrollanordnung (200) nach Anspruch 10, mit:
einer Identifizierungseinrichtung (203), welche ausgebildet ist, das korrigierte Gesichtsbild der Person mit einem vorgespeicherten Referenzgesichtsbild zu vergleichen, um die Person zu identifizieren.

12. Zugangskontrollanordnung (200) nach einem der Ansprüche 10 oder 11, mit:
einer Beleuchtungseinrichtung (205), welche ausgebildet ist, das Gesicht (403) der Person und den Referenzfarbstreifen (405) mit Licht einer vorbestimmten Farbtemperatur zu beleuchten.

13. Zugangskontrollanordnung (200) nach Anspruch 12, wobei das Licht der Beleuchtungseinrichtung (205) ein vorbestimmtes Emissionsspektrum aufweist.

14. Verfahren (300) zum Reduzieren eines Farbstichs eines Gesichtsbildes (401) einer Person unter Verwendung einer Vorrichtung (100), wobei das Gesichtsbild (401) ein Abbild eines Gesichts (403) der Person und eines Referenzfarbstreifens (405) umfasst, wobei der Referenzfarbstreifen (405) ein Referenzfarbfeld (407) umfasst, wobei dem Referenzfarbfeld (407) eine vorbestimmte Referenzfarbe zugeordnet ist, wobei die Vorrichtung (100) einen Speicher (101) und einen Prozessor (103) umfasst, und wobei der Speicher (101) ausgebildet ist, das Gesichtsbild (401) zu speichern, mit:
Erfassen (301) des Referenzfarbstreifens (405) in dem Gesichtsbild (401) durch den Prozessor (103);
Erfassen (303) des Referenzfarbfeldes (407) in dem erfassten Referenzfarbstreifen (405) durch den Prozessor (103);
Extrahieren (305) einer Farbe aus dem erfassten Referenzfarbfeld (407) durch den Prozessor (103);
Vergleichen (307) der extrahierten Farbe mit der vorbestimmten Referenzfarbe durch den Prozessor (103), um eine Farbabweichung zu erhalten; und
Reduzieren (309) des Farbstichs des Gesichtsbildes (401) auf der Basis der Farbabweichung durch den Prozessor (103), um ein korrigiertes Gesichtsbild zu erhalten,
**gekennzeichnet durch**
automatisiertes Entfernen des Referenzfarbstreifens (405) aus dem korrigierten Gesichtsbild durch den Prozessor (103).

15. Computerprogramm mit einem Programmcode zum Ausführen des Verfahrens (300) nach Anspruch 14.

## Claims

1. A device (100) for reducing a color cast of a facial image (401) of a person, wherein the facial image (401) comprises an image of a face (403) of the person and a reference color strip (405), wherein the reference color strip (405) comprises a reference color field (407), and wherein a predetermined reference color is assigned to the reference color field (407), the device comprising:
a memory (101), which is configured to store the facial image (401); and
a processor (103), which is configured to detect the reference color strip (405) in the facial image (401), detect the reference color field (407) in the detected reference color strip (405), extract a color from the detected reference color field (407), compare the extracted color with the predetermined reference color to obtain a color deviation, and reduce the color cast of the facial image (401) based on the color deviation in order to obtain a corrected facial image, **characterized in that** the processor (103) is configured to automatically remove the reference color strip (405) from the corrected facial image.

2. The device (100) of claim 1, wherein the reference color strip (405) comprises a further reference color field (409), wherein the further reference color field (409) is assigned a further predetermined reference color, and wherein the processor (103) is configured to detect the further reference color field (409) in the detected reference color strip (405), extract a further color from the detected further reference color field (409), compare the extracted further color with the further predetermined reference color in order to obtain a further color deviation, and further reduce the color cast of the facial image (401) based on the further color deviation.

3. The device (100) according to one of the preceding claims, wherein the reference color strip (405) has a predetermined geometric shape, and wherein the processor (103) is configured to detect the reference color strip (405) in the facial image (401) on the basis of the predetermined geometric shape.

4. The device (100) according to one of the preceding claims, wherein the processor (103) is configured to detect the face (403) of the person in the facial image (401), to determine a section of the facial image (401), wherein the section includes the detected face (403) of the person, and wherein the section does not include the detected reference color strip (405), and to limit the corrected facial image to the determined section.

5. The device (100) according to one of the preceding claims, wherein the processor (103) is configured to determine a position of the detected reference color strip (405) in the facial image (401) or the corrected facial image, and to replace the reference color strip (405) at the determined position in the corrected facial image with a predetermined color.

6. The device (100) according to one of the preceding claims, wherein the color deviation is formed by a Euclidean distance between color coordinates (703, 705) of the extracted color and color coordinates (703, 705) of the predetermined reference color.

7. The device (100) according to one of the preceding claims, wherein the processor (103) is configured to convert the facial image (401) into a CIE L*a*b* color space (701).

8. The device (100) according to one of the preceding claims, wherein the predetermined reference color can be represented in a CIE L*a*b* color space (701), and wherein the predetermined reference color has an a* color coordinate (703) between 5 and 14 and a b* color coordinate (705) between 10 and 24.

9. The device (100) according to one of the preceding claims, comprising:
a communication interface (105), which is configured to receive the facial image (401) via a communication network and to store the facial image (401) in the memory (101).

10. An access control arrangement (200), comprising:
an image camera (201), which is configured to capture a facial image (401) of a person, wherein the facial image (401) comprises an image of a face (403) of the person and a reference color strip (405); and
a device (100) according to one of claims 1 to 9, wherein the device (100) is configured to reduce a color cast of the facial image (401) of the person in order to obtain a corrected facial image.

11. The access control arrangement (200) according to claim 10, comprising:
an identification device (203), which is configured to compare the corrected facial image of the person with a pre-stored reference facial image in order to identify the person.

12. The access control arrangement (200) according to one of claims 10 or 11, comprising:
an illumination device (205), which is configured to illuminate the face (403) of the person and the reference color strip (405) with light of a predetermined color temperature.

13. The access control arrangement (200) according to claim 12, wherein the light of the illumination device (205) has a predetermined emission spectrum.

14. A method (300) for reducing a color cast of a facial image (401) of a person using a device (100), wherein the facial image (401) comprises an image of a face (403) of the person and a reference color strip (405), wherein the reference color strip (405) comprises a reference color field (407), wherein a predetermined reference color is assigned to the reference color field (407), wherein the device (100) comprises a memory (101) and a processor (103), and wherein the memory (101) is configured to store the facial image (401), the method comprising:
detecting (301) the reference color strip (405) in the facial image (401) by the processor (103);
detecting (303) the reference color field (407) in the detected reference color strip (405) by the processor (103);
extracting (305) a color from the detected reference color field (407) by the processor (103);
comparing (307) the extracted color with the predetermined reference color by the processor (103) to obtain a color deviation; and
reducing (309) the color cast of the facial image (401) based on the color deviation by the processor (103) in order to obtain a corrected facial image,
**characterized in** automated removal of the reference color strip (405) from the corrected facial image by the processor (103).

15. A computer program having program code for executing the method (300) according to claim 14.

## Revendications

1. Dispositif (100) de réduction de la dominante de couleur d'une image faciale (401) d'une personne, l'image faciale (401) comprenant une image du visage (403) de la personne et une bande de couleur de référence (405), la bande de couleur de référence (405) comprenant un champ de couleur de référence (407), et une couleur de référence prédéterminée étant attribuée au champ de couleur de référence (407), le dispositif comprend :
une mémoire (101), qui est configurée pour stocker l'image faciale (401) ; et
un processeur (103), qui est configuré pour détecter la bande de couleur de référence (405) dans l'image faciale (401), détecter le champ de couleur de référence (407) dans la bande de couleur de référence détectée (405), extraire une couleur du champ de couleur de référence détecté (407), comparer la couleur extraite avec la couleur de référence prédéterminée pour obtenir un écart de couleur, et réduire la dominante de couleur de l'image faciale (401) sur la base de l'écart de couleur afin d'obtenir une image faciale corrigée, **caractérisé en ce que** le processeur (103) est configuré pour supprimer automatiquement la bande de couleur de référence (405) de l'image faciale corrigée.

2. Dispositif (100) selon la revendication 1, dans lequel la bande de couleur de référence (405) comprend un autre champ de couleur de référence (409), dans lequel l'autre champ de couleur de référence (409) se voit attribuer une autre couleur de référence prédéterminée, et dans lequel le processeur (103) est configuré pour détecter l'autre champ de couleur de référence (409) dans la bande de couleur de référence détectée (405), extraire une autre couleur de l'autre champ de couleur de référence détecté (409), comparer l'autre couleur extraite à l'autre couleur de référence prédéterminée afin d'obtenir un autre écart de couleur, et réduire davantage la dominante de couleur de l'image faciale (401) sur la base de l'autre écart de couleur.

3. Dispositif (100) selon l'une des revendications précédentes, dans lequel la bande de couleur de référence (405) a une forme géométrique prédéterminée, et dans lequel le processeur (103) est configuré pour détecter la bande de couleur de référence (405) dans l'image faciale (401) sur la base de la forme géométrique prédéterminée.

4. Dispositif (100) selon l'une des revendications précédentes, dans lequel le processeur (103) est configuré pour détecter le visage (403) de la personne dans l'image faciale (401), pour déterminer une section de l'image faciale (401), dans laquelle la section comprend le visage détecté (403) de la personne, et dans laquelle la section ne comprend pas la bande de couleur de référence détectée (405), et pour limiter l'image faciale corrigée à la section déterminée.

5. Dispositif (100) selon l'une des revendications précédentes, dans lequel le processeur (103) est configuré pour déterminer une position de la bande de couleur de référence détectée (405) dans l'image faciale (401) ou l'image faciale corrigée, et pour remplacer la bande de couleur de référence (405) à la position déterminée dans l'image faciale corrigée par une couleur prédéterminée.

6. Dispositif (100) selon l'une des revendications précédentes, dans lequel l'écart de couleur est formé par une distance euclidienne entre les coordonnées de couleur (703, 705) de la couleur extraite et les coordonnées de couleur (703, 705) de la couleur de référence prédéterminée.

7. Dispositif (100) selon l'une des revendications précédentes, dans lequel le processeur (103) est configuré pour convertir l'image faciale (401) en un espace colorimétrique CIE L*a*b* (701).

8. Dispositif (100) selon l'une des revendications précédentes, dans lequel la couleur de référence prédéterminée peut être représentée dans un espace colorimétrique CIE L*a*b* (701), et dans lequel la couleur de référence prédéterminée a une coordonnée de couleur a* (703) comprise entre 5 et 14 et une coordonnée de couleur ab* (705) comprise entre 10 et 24.

9. Dispositif (100) selon l'une des revendications précédentes, comprenant :
une interface de communication (105), qui est configurée pour recevoir l'image faciale (401) via un réseau de communication et pour stocker l'image faciale (401) dans la mémoire (101).

10. Dispositif de contrôle d'accès (200), comprenant :
une caméra d'image (201), qui est configurée pour capturer une image faciale (401) d'une personne, l'image faciale (401) comprenant une image d'un visage (403) de la personne et une bande de couleur de référence (405) ; et
un dispositif (100) selon l'une des revendications 1 à 9, dans lequel le dispositif (100) est configuré pour réduire une dominante de couleur de l'image faciale (401) de la personne afin d'obtenir une image faciale corrigée.

11. Dispositif de contrôle d'accès (200) selon la revendication 10, comprenant :
un dispositif d'identification (203), qui est configuré pour comparer l'image faciale corrigée de la personne avec une image faciale de référence pré-stockée afin d'identifier la personne.

12. Dispositif de contrôle d'accès (200) selon l'une des revendications 10 ou 11, comprenant :
un dispositif d'éclairage (205), qui est configuré pour éclairer le visage (403) de la personne et la bande de couleur de référence (405) avec une lumière d'une température de couleur prédéterminée.

13. Dispositif de contrôle d'accès (200) selon la revendication 12, dans lequel la lumière du dispositif d'éclairage (205) a un spectre d'émission prédéterminé.

14. Procédé (300) de réduction de la dominante de couleur d'une image faciale (401) d'une personne, à l'aide d'un dispositif (100), l'image faciale (401) comprend une image du visage (403) de la personne et une bande de couleur de référence (405), la bande de couleur de référence (405) comprend un champ de couleur de référence (407), une couleur de référence prédéterminée est attribuée au champ de couleur de référence (407), le dispositif (100) comprend une mémoire (101) et un processeur (103), et la mémoire (101) est configurée pour stocker l'image faciale (401), le procédé comprend :
détection (301) de la bande de couleur de référence (405) dans l'image faciale (401) par le processeur (103) ;
détecter (303) le champ de couleur de référence (407) dans la bande de couleur de référence détectée (405) par le processeur (103) ;
extraire (305) une couleur du champ de couleur de référence détecté (407) par le processeur (103) ;
comparer (307) la couleur extraite avec la couleur de référence prédéterminée par le processeur (103) pour obtenir un écart de couleur ; et
réduire (309) la dominante de couleur de l'image faciale (401) en fonction de l'écart de couleur par le processeur (103) afin d'obtenir une image faciale corrigée,
**caractérisé par** la suppression automatisée de la bande de couleur de référence (405) de l'image faciale corrigée par le processeur (103).

15. Programme informatique comportant un code de programme pour exécuter le procédé (300) selon la revendication 14.
